# EUROPÄISCHE PATENTSCHRIFT

(11) **EP 1 557 482 B1**
(45) Veröffentlichungstag und Bekanntmachung des Hinweises auf die Patenterteilung: **06.06.2012**
(21) Anmeldenummer: 05000435.7
(22) Anmeldetag: 12.01.2005
(51) Int. Cl.: C23C 18/16, B01D 61/44, B01D 61/54

(54) **Verfahren zur Instandhaltung von Metallisierungsbädern**
Process for the maintenance of metallization baths
Procédé pour l'entretien des bains de métallisation

(30) Priorität: 20.01.2004 DE 102004002778
(43) Veröffentlichungstag der Anmeldung: 27.07.2005
(73) Patentinhaber: Enthone Inc., West Haven, Connecticut 06516 (US)
(72) Erfinder: Möbius, Andreas, Dr., 41564 Kaarst (DE); König, Axel, Dr., 91074 Herzogenaurach (DE); Van Dun, Hubertus F.A.M., 5211 TM's-Hertogenbosch (NL)
(74) Vertreter: Stenger, Watzke & Ring

(56) Entgegenhaltungen:
- EP-A- 0 015 737
- EP-A- 0 347 016
- EP-A- 1 239 057

## Beschreibung

Die vorliegende Erfindung betrifft ein Verfahren zur Instandhaltung von Metallisierungsbädern in der Galvanotechnik. Insbesondere betrifft die Erfindung Verfahren zur Instandhaltung von Metallisierungsbädern bei der stromlosen Abscheidung von Metallen.

Bei der außenstromlosen Abscheidung von Metallen wie z. B. die außenstromlose, chemische Abscheidung von Kupfer aus entsprechenden Elektrolyten wird dem Elektrolyten ein Reduktionsmittel zugesetzt, welches als innere Spannungsquelle die Abscheidung des Metalls ermöglicht.

Das grundlegende Prinzip der außenstromlosen Metallabscheidung sei hier am Beispiel eines Kupferelektrolyten erläutert.

In der Regel enthalten Elektrolyten zur außenstromlosen, chemischen Kupferabscheidung komplex- oder chelatgebundene Kupferionen wie z. B. Kupfertartratkomplexe oder Kupfer-EDTA-Chelate. Als Reduktionsmittel dient in der Regel Formaldehyd oder ein vergleichbares Reduktionsmittel, welches infolge einer Oxidationsreaktion zum Formiat bzw. dem entsprechenden Anion die zur Reduktion des Kupfers notwendigen Elektronen liefert.

Formaldehyd ist jedoch nur im hochalkalischen pH-Bereich von ca. pH 11 bis pH 14 in der Lage auf zweiwertige Kupferionen, wie sie in der Regel in Elektrolyten zur außenstromlosen Abscheidung von Kupfer verwendet werden, als ausreichend starkes Reduktionsmittel zu wirken und eine Metallabscheidung zu ermöglichen. Daraus folgt, daß die Kupferionen in dem Elektrolyten so stark komplexiert oder chelatisiert vorliegen, daß sie keine schwer löslichen Metallhydroxide bilden können.

Darüber hinaus wird Kupfer in der Regel in Form von Sulfaten in den Elektrolyten eingebracht. Als Folge der Reaktion der zweiwertigen Kupferionen zu elementarem Kupfer reichert sich der Elektrolyt mit Sulfatanionen an. Diese Anreicherung an Sulfatanionen in Kombination mit der durch die Oxidation des Formaldehyds hervorgerufenen Konzentrationserhöhung von Formiatanionen führt zu einer Absenkung des pH-Wertes. Um den Elektrolyten weiterhin in einem arbeitsfähigen pH-Bereich zu halten, werden diesem Alkalihydroxide wie Natriumhydroxid zugesetzt. Darüber hinaus werden dem Elektrolyten die verbrauchten Mengen Kupfersulfat und Formaldehyd nachdosiert. Infolge des zuvor beschriebenen verändern sich somit die chemischen und physikalischen Eigenschaften des Elektrolyten, was zu einer begrenzten Haltbarkeit und Verwendbarkeit des gleichen führt.

Stromlos Nickelbäder arbeiten zumeist im sauren pH-Bereich. Dort ist die Badinstandhaltung mittels Elektrodialyse bereits aus den Dokumenten EP 1 239 057 A1, DE 198 49 278 C1 und EP 0 787 829 A1 bekannt. Die dort beschriebene Prozeßführung und die Kombination der Verfahren und Membranen lassen sich allerdings nicht für stromlos Kupfer oder andere im alkalischen arbeitenden stromlose Metallisierungsbäder einsetzen.

Der Erfindung liegt somit die **Aufgabe** zugrunde, ein Verfahren zur Verfügung zu stellen, welches in der Lage ist, die oben genannten Nachteile zu überwinden und eine längere Benutzungsdauer und Betriebsfähigkeit eines Elektrolyten zur stromlosen Abscheidung von Metallen zu gewährleisten.

Gelöst wird diese Aufgabe erfindungsgemäß durch ein Verfahren zur Regenerierung von zur stromlosen Metallisierung eingesetzten Elektrolytbädern mittels der Verfahrensschritte
a) Ableiten zumindest eines Teilstroms des Elektrolyten aus dem Prozeßbehälter,
b) Regenerierung des abgeleiteten Elektrolytstroms,
c) Rückführung des regenerierten Elektrolytstroms in den Prozeßbehälter,
wobei zur Regenerierung der abgeleitete Teilstrom einer Dialyse- und/oder Elektrodialyseeinheit zugeführt wird, in welcher die beim stromlosen Metallisierungsprozeß freigesetzen Anionen über eine ionenselektive Membran ausgetauscht werden, und wobei als Gegenlösung zur Dialyse und/oder Elektrodialyse des Elektrolyten eine alkali- und/oder erdalkalihydroxidhaltige Lösung eingesetzt wird, welches dadurch gekennzeichnet ist, daß dem Elektrolyten vor der Rückführung in den Prozeßbehälter im Metallisierungsprozeß verbrauchte Komponenten zugegeben werden und wobei die im Dialyse- und/oder Elektrodialyseprozeß eingesetzte Alkali- und/oder Erdalkalihydroxidlösung nach dem Dialyseprozeß durch geeignete Oxidationsmittel oder durch Fällung der im Dialyse- und/oder Elektrodialyseprozeß aufgenommenen Anionen als schwer lösliche Salze regeneriert und im Anschluß gegebenenfalls aufkonzentriert wird.

Vorteilhafter Weise werden im erfindungsgemäßen Verfahren die im Metallisierungsprozeß freigesetzten Anionen in der Dialyse- und/oder Elektrodialyseeinheit gegen Hydroxidionen ausgetauscht.

Zu diesem Zweck weist die Dialyse- und/oder Elektrodialyseeinheit im erfindungsgemäßen Verfahren vorteilhafter Reise eine anionenselektive Membran auf.

Als Gegenlösung zur Dialyse und/oder Elektrodialyse des Elektrolyten können im erfindungsgemäßen Verfahren alkali- und/oder erdalkalihydroxid-haltige Lösungen eingesetzt werden.

Ein solches Verfahren eignet sich für Elektrolyten zur stromlosen Abscheidung von Kupfer, Nickel, ternäre Nickellegierungen und Gold.

Die mittels der Dialyse und/oder Elektrodialyse auszutauschenden Ionen können Sulfationen, Formiationen, Hypophosphitionen, Phosphitionen, Phosphationen, Chloridionen, u. a. gut lösliche Anionen sein.

In einer weiteren Ausbildungsform des erfindungsgemäßen Verfahrens können die als Gegenlösung im Dialyse- und/oder Elektrodialyseprozeß eingesetzten alkali- und/oder erdalkalihydroxid-haltigen Lösungen nach dem Dialyseprozeß regeneriert werden. Dies kann erfindungsgemäß durch geeignete Oxidationsmittel geschehen. Im Anschluß an eine solche Regeneration können die alkali- und/oder erdalkalihaltigen Lösungen ggf. aufkonzentriert werden.

Eine weitere Möglichkeit im erfindungsgemäßen Verfahren die eingesetzten Alkali- und/oder Erdalkalilösungen zu regenerieren, ist die Fällung der im Dialyse- und/oder Elektrodialyseprozeß aufgenommenen Anionen als schwer lösliche Salze. Ein solches Salz kann im Fall der Sulfationen zum Beispiel schwer lösliches Bariumsulfat sein, welches durch Zugabe von Bariumhydroxid zu den zu regenerierenden alkali- und/oder erdalkalihydroxid-haltigen Gegenlösungen der Dialyse- und/oder Elektrodialyseprozesse ausgefällt werden kann. Andere geeignete Salze sind z. B. Calciumhydroxid oder allgemein andere mit Sulfaten schwerlösliche Verbindungen bildende Substanzen.

Formiationen können durch geeignete Oxidationsmittel zur Regeneration der Gegenlösungen in CO₂ und Wasser umgesetzt werden. Geeignete Oxidationsmittel für eine solche Reaktion sind Wasserstoffperoxid, Peroxidsulfate oder das als Caroat bekannte Produkt der Firma Degussa.

Voraussetzung für die Anwendung eines Dialyse- und/oder Elektrodialyseverfahrens zur Regeneration von Elektrolyten zur außenstromlosen Abscheidung von Metallen ist die Verwendung von anionenselektiven Membranen in den Dialyse- und/oder Elektrodialyseschritten.

Geeignete anionenselektive Membranen für ein erfindungsgemäßes Verfahren sind zum Beispiel handelsübliche mono- und bivalente Anionenaustauschermembranen der Firmen Tokuyama Soda Co. Ltd.; Asaki Glass Co. Ltd., Purolite International, Polymerchemie Altmeier oder Reichelt Chemietechnik.

Das Anlegen eines elektrischen Feldes im Dialyseschritt des erfindungsgemäßen Verfahrens beschleunigt den Trennungsvorgang vorteilhaft.

Prinzipiell können sowohl beim Einsatz einer Dialysestufe als auch beim Einsatz einer Elektrodialysestufe der zu regenerierende Elektrolyt und die alkali- und/oder erdalkalihaltige Gegenlösung im Gleich- wie auch im Gegenstrom geführt werden.

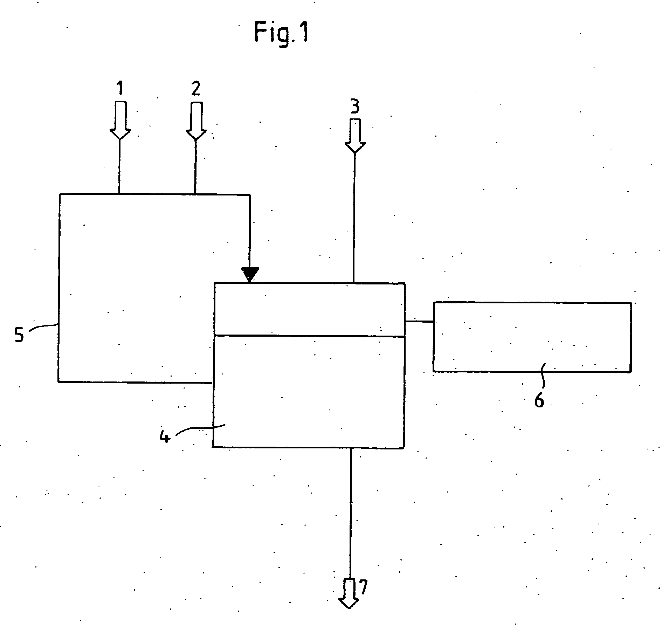

Fig. 1 zeigt ein konventionelles Verfahren zur stromlosen Metallisierung von Substraten. Im Fall einer stromlosen Kupferabscheidung auf einem Substrat (3) zum Erhalt eines metallisierten Substrats (7) wird dem Elektrolyten (4) ein Teilstrom (5) entnommen, welcher in Abhängigkeit der verbrauchten Menge an Metallionen und Reduktionsmittel mit zum Beispiel Kupfersulfat (1) und Formaldehyd (2) angereichert wird und dem Elektrolyten (4) wieder zugeführt wird. Der Elektrolyt (4) reichert sich im Laufe des Verfahrens mit Formiat- und Sulfationen (6) an.

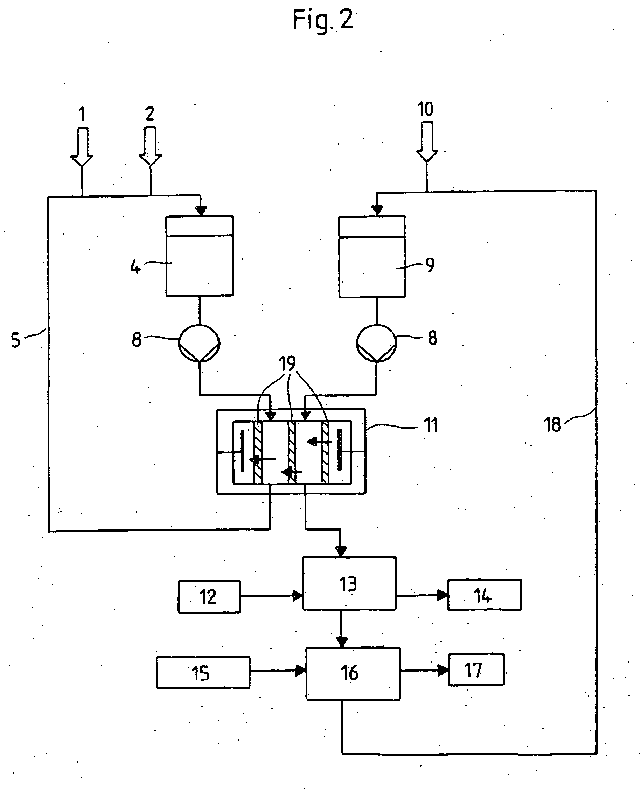

Fig. 2 zeigt das erfindungsgemäße Verfahren zur Regeneration von Elektrolyten zur stromlosen Abscheidung von Metallen. Dem Elektrolyten (4) wird ein Teilstrom, zum Beispiel über eine Pumpe (8), entnommen und einer Dialyse- und/oder Elektrodialyseeinheit (11) zugeführt. Die Dialyse- und/oder Elektrodialyseeinheit weist anionenselektive Membranen (19) auf. Die Gegenlösung zur Dialyse/Elektrodialyse (9) wird gleichfalls zum Beispiel über eine Pumpe (8) der Dialyse- und/oder Elektrodialyseeinheit (11) zugeführt. Dies kann im Gleich- oder auch Gegenstrom zum zu regenerierenden Elektrolyten (4) geschehen. Der abgezweigte Elektrolytteilstrom (5) wird im Anschluß an die Regeneration in der Dialyse- und/oder Elektrodialyseeinheit (11) wieder mit Metallionen und Reduktionsmitteln angereichert. Dies können zum Beispiel Kupfersulfat (1) und Formaldehyd (2) sein. Im Fall von Kupfersulfat und Formaldehyd werden durch die Gegenlösung (9) in der Dialyse- und/oder Elektrodialyseeinheit (11) über die anionenselektive Membran (19) Formiat- und Sulfationen aufgenommen. Zur Regeneration der Gegenlösung können nun dieser zur Sulfatfällung (13) Fällungsmittel (12) wie zum Beispiel Bariumhydroxid zugesetzt werden. Die gefällten Sulfate (14) können abgetrennt werden. Die in die Gegenlösung aufgenommenen Formiationen können durch Zugabe von Oxidationsmitteln (15) in einer Oxidation (16) zu Kohlendioxid (17) und Wasser umgesetzt werden. Die regenerierte Gegenlösung (18) kann unter Zugabe von Alkali- und/oder Erdalkalihydroxiden (10) rückgeführt werden.

### Bezugszeichenliste

- 1: Zugabe Kupfersulfat
- 2: Zugabe Formaldehyd
- 3: zu metallisierendes Substrat
- 4: Elektrolyt zur stromlosen Kupferabscheidung
- 5: Teilstrom
- 6: Anreicherung an Formiat- und Sulfationen
- 7: metallisiertes Substrat
- 8: Pumpe
- 9: Gegenlösung zur Dialyse/Elektrodialyse
- 10: Alkali-/Erdalkalihydroxidzugabe
- 11: Dialyse/Elektrodialyseeinheit
- 12: Zugabe Fällungsmittel
- 13: Sulfatfällung
- 14: gefällte Sulfate
- 15: Zugabe Oxidationsmittel
- 16: Oxidation der Formiationen
- 17: Kohlendioxid
- 18: Rückführung regenerierte Gegenlösung
- 19: anionenselektive Membran

## Patentansprüche

1. Verfahren zur Regenerierung von zur stromlosen Metallisierung eingesetzten Elektrolytbädem mittels der Verfahrensschritte:
a) Ableiten zumindest eines Teilstroms des Elektrolyten aus dem Prozeßbehälter,
b) Regenerierung des abgeleiteten Elektrolytestroms,
c) Rückführung des regenerierten Elektrolytstroms in den Prozeßbehälter,
wobei zur Regenerierung der abgeleitete Teilstrom einer Dialyse- und/oder Elektrodialyseeinheit zugeführt wird, in welcher die beim stromlosen Metallisierungsprozeß freigesetzen Anionen über eine ionenselektive Membran ausgetauscht werden, und wobei als Gegenlösung zur Dialyse und/oder Elektrodialyse des Elektrolyten eine alkali- und/oder erdalkalihydroxidhaltige Lösung eingesetzt wird,
**dadurch gekennzeichnet, daß**
dem Elektrolyten vor der Rückführung in den Prozeßbehälter im Metallisierungsprozeß verbrauchte Komponenten zugegeben werden und wobei die im Dialyse- und/oder Elektrodialyseprozeß eingesetzte Alkali- und/oder Erdalkalihydroxidlösung nach dem Dialyseprozeß durch geeignete Oxidationsmittel oder durch Fällung der im Dialyse- und/oder Elektrodialyseprozeß aufgenommenen Anionen als schwer lösliche Salze regeneriert und im Anschluß gegebenenfalls aufkonzentriert wird.

2. Verfahren gemäß Anspruch 1, **dadurch gekennzeichnet, daß** die im Metallisierungsprozeß freigesetzten Anionen gegen Hydroxidionen ausgetauscht werden.

3. Verfahren gemäß mindestens einem der vorhergehenden Ansprüche, **dadurch gekennzeichnet, daß** die Dialyse- und/oder Elektrodialyseeinheit eine anionenselektive Membran aufweist.

4. Verfahren gemäß mindestens einem der vorhergehenden Ansprüche, **dadurch gekennzeichnet, daß** es sich bei dem stromlos abgeschiedenen Metall um mindestens ein Metall der Gruppe bestehend aus Kupfer, Nickel, ternäre Nickellegierung, Gold, handelt.

5. Verfahren gemäß mindestens einem der vorhergehenden Ansprüche, **dadurch gekennzeichnet, daß** es sich bei den im Dialyse- und/oder Elektrodialyseprozeß auszutauschenden Ionen um mindestens ein Ion der Gruppe bestehend aus Sulfationen, Formationen, Hypophosphitionen, Phospitionen, Phosphationen, und Chloridionen handelt.

6. Verfahren gemäß mindestens einem der vorhergehenden Ansprüche, **dadurch gekennzeichnet, daß** die im Dialyse- und/oder Elektrodialyseprozeß eingesetzte alkali- und/oder erdalkalihydroxidhaltige Lösung in der Dialyse- und/oder Elektrodialyseeinheit im Gegenstrom oder Gleichstrom zum zu regenerierende Elektrolyten geführt wird.

7. Verfahren gemäß Anspruch 1, **dadurch gekennzeichnet, daß** zur Oxidation der alkali- und/oder erdalkalihydroxidhaltigen Lösung mindestens ein Oxidationsmittel der Gruppe bestehend aus Wasserstoffperoxid, Perodixsulfaten oder Caroat eingesetzt wird.

8. Verfahren gemäß Anspruch 1, **dadurch gekennzeichnet, daß** zur Fällung der im Dialyse- und/oder Elektrodialyseprozeß aufgenommenen Anionen als schwer lösliche Salze mindestens eine Substanz der Gruppe bestehend aus Bariumhydroxid, Calciumhydroxid oder anderen mit Sulfaten schwerlösliche Verbindungen bildenden Substanzen eingesetzt wird.

## Claims

1. A method for the regeneration of electrolyte baths used for currentless metallisation by means of the process steps:
a) removal of at least one partial flow of electrolyte from the process vessel,
b) regeneration of the removed electrolye flow,
c) return of the regenerated electrolyte flow to the process vessel,
wherein the removed partial flow is fed to a dialysis and/or electrodialysis unit for regeneration, in which the anions released during the currentless metallisation process are exchanged across an ion-selective membrane and wherein an alkaline- and/or alkalione earth hydroxide-containing solution is used as the counter solution for dialysis and/or electrodialysis of the electrolyte,
**characterised in that**
components used in the metallisation process are added to the electrolyte before it is returned to the process vessel and wherein the alkaline- and/or alkaline earth hydroxide solution used in the dialysis and/or electrodialysis process is regenerated following the dialysis process by suitable oxidation agents or by precipitation of the anions taken up in the dialysis and/or electrodialysis process as barely soluble salts and subsequently concentrated if necessary.

2. The method according to claim 1, **characterised in that** the anions released in the metallisation proces are exchanged for hydroxide ions.

3. The method according to at least one of the preceding claims, **characterised in that** the dialysis and/or electrodialysis unit exhibits an anion-selective membrane.

4. The method according to at least one of the preceding claims, **characterised in that** the currentlessly deposited metal is at least one metal from the group comprising copper, nickel, ternary nickel alloy, gold.

5. The method according to at least one of the preceding claims, **characterised in that** the ions being exchanged in the dialysis and/or electrodialysis process are at least one ion from the group comprising sulphate ions, formate ions, hypophospite ions, phosphite ions, phosphate ions and chloride ions.

6. The method according to at least one of the preceding claims, **characterised in that** the alkaline and/or alkaline earth hydroxide-containing solution used in the dialysis and/or electrodialysis process are fed to the electrolyte being regenerated in counter- or cocurrent flow in the dialysis and/or electrodialysis unit.

7. The method according to claim 1, **characterised in that** at least one oxidation agent from the group comprising hydrogen peroxide, peroxide sulphates or caroate is used for the oxidation of the alkaline and/or earth alkaline hydroxide-containing solution.

8. The method according to claim 1, **characterised in that** at least one substance from the group comprising barium hydroxide, calcium hydroxide or other substances forming barely soluble compounds with sulphates is used for precipitation of the anions taken up as barely soluble salts in the dialysis and/or electrodialysis process.

## Revendications

1. Procédé de régénération de bains électrolytiques ayant servi à la métallisation chimique, au moyen des étapes de procédé suivantes :
a) prélèvement, dans le récipient du processus, au moins d'un débit partiel de l'électrolyte,
b) régénération du débit d'électrolytes prélevé,
c) recyclage, dans le récipient du processus, du débit d'électrolyte régénéré,
le débit partiel qui est prélevé à des fins de régénération étant acheminé vers une unité de dialyse et/ou d'électrodialyse dans laquelle les anions dégagés lors du processus de métallisation chimique sont échangés à travers une membrane sélective vis-à-vis des ions, et la solution mise en oeuvre de l'autre côté pour réaliser la dialyse et/ou électrodialyse de l'électrolyte étant une solution contenant des hydroxydes alcalins et/ou alcalino-terreux,
**caractérisé en ce que**,
avant de recycler l'électrolyte dans le récipient du processus, on y rajoute des constituants épuisés pendant les processus de métallisation, et la solution d'hydroxydes alcalins ou alcalino-terreux mise en oeuvre dans le processus de dialyse et/ou d'électrodialyse est, suite au processus de dialyse, régénérée par des agents oxydants appropriés ou par précipitation des anions accumulés durant le processus de dialyse et/ou d'électrodialyse et ensuite, le cas échéant, concentrée.

2. Procédé selon la revendication 1, **caractérisé en ce que** les anions dégagés dans le processus de métallisation sont échangés contre des ions d'hydroxyde.

3. Procédé selon au moins une des revendications précédentes, **caractérisé en ce que** l'unité de dialyse et/ou d'électrodialyse comporte une membrane sélective vis-à-vis des anions.

4. Procédé selon au moins une des revendications précédentes, **caractérisé en ce que** le métal déposé chimiquement est au moins un métal issu du groupe constitué de cuivre, de nickel, d'alliage ternaire de nickel, d'or.

5. Procédé selon au moins une des revendications précédentes, **caractérisé en ce que** les ions devant être échangés dans le processus de dialyse et/ou d'électrodialyse représentent au moins un ion issu du groupe constitué d'ions de sulfate, d'ions de formiate, d'ions d'hypophosphite, d'ions de phosphonate, d'ions de phosphate et d'ions de chlorure.

6. Procédé selon au moins une des revendications précédentes, **caractérisé en ce que** la solution contenant des hydroxydes alcalins ou alcalino-terreux qui est mise en oeuvre dans le processus de dialyse et/ou d'électrodialyse, est acheminée, au sein de l'unité de dialyse et/ou d'électrodialyse, de façon à être à contre-courant ou à co-courant par rapport à l'électrolyte devant être régénéré.

7. Procédé selon la revendication 1, **caractérisé en ce que** l'on met en oeuvre au moins un agent oxydant issu du groupe constitué de peroxyde d'hydrogène, de peroxysulfates ou de Caroat, pour réaliser l'oxydation de la solution contenant des hydroxydes alcalins ou alcalino-terreux.

8. Procédé selon la revendication 1, **caractérisé en ce que** l'on met en oeuvre au moins une substance issue du groupe constitué d'hydroxyde de baryum, d'hydroxyde de calcium ou d'autres substances formant des composés peu solubles avec des sulfates, pour réaliser la précipitation des anions accumulés dans le processus de dialyse et/ou d'électrodialyse.
